(19) Europäisches Patentamt
European Patent Office
Office européen des brevets

(11) **EP 1 817 842 B1**

(12) **EUROPÄISCHE PATENTSCHRIFT**

(45) Veröffentlichungstag und Bekanntmachung des Hinweises auf die Patenterteilung:
**14.04.2010 Patentblatt 2010/15**

(21) Anmeldenummer: **05779622.9**

(22) Anmeldetag: **24.08.2005**

(51) Int Cl.:
*H02P 7/14* (2006.01)    *G05D 7/06* (2006.01)
*F24F 11/02* (2006.01)

(86) Internationale Anmeldenummer:
**PCT/DE2005/001490**

(87) Internationale Veröffentlichungsnummer:
**WO 2006/058509 (08.06.2006 Gazette 2006/23)**

(54) **VERFAHREN ZUR BESTIMMUNG DER BELASTUNG EINES ELEKTRISCHEN ANTRIEBSMOTORS**

METHOD FOR DETERMINING THE LOAD OF AN ELECTRIC MOTOR DRIVE

PROCEDE POUR DETERMINER LA CHARGE APPLIQUEE A UN MOTEUR D'ENTRAINEMENT ELECTRIQUE

(84) Benannte Vertragsstaaten:
**DE FR**

(30) Priorität: **30.11.2004 DE 102004057712**

(43) Veröffentlichungstag der Anmeldung:
**15.08.2007 Patentblatt 2007/33**

(73) Patentinhaber: **Conti Temic microelectronic GmbH**
**90411 Nürnberg (DE)**

(72) Erfinder: **DORNER, Thomas**
**91220 Schnaittach (DE)**

(74) Vertreter: **Hassa, Oliver Michael**
**Reinhard, Skuhra, Weise & Partner GbR**
**Patent- und Rechtsanwälte**
**Friedrichstrasse 31**
**80801 München (DE)**

(56) Entgegenhaltungen:
**EP-A- 0 432 747    EP-A- 1 039 139**
**CA-A1- 2 320 581    US-A- 4 806 833**
**US-A- 5 019 757**

EP 1 817 842 B1

## Beschreibung

Die Erfindung betrifft ein Verfahren zur Bestimmung der Belastung eines zum Antreiben mit einer Arbeitsmaschine gekoppelten, elektrischen Antriebsmotors.

Der Einsatz elektrischer Antriebsmotoren hat im Kraftfahrzeugbereich eine große Bedeutung gewonnen. Im Kraftfahrzeug werden insbesondere elektronisch angesteuerte Gleichstromnebenschluss-Motoren eingesetzt, beispielsweise zum Antrieb von Kühlerlüftern, da Gleichstromnebenschluss-Motoren einfach steuerbar oder regelbar sind. Beim Betrieb von derartigen Motoren muss sichergestellt sein, dass der Motor und die Ansteuerelektronik nicht durch Überströme zerstört werden. Überströme entstehen bei einer Überlastung des Motors, beispielsweise wenn die Lager des Motors schwergängig sind. Überströme entstehen auch durch äußere Einflüsse, wie beispielsweise durch das Schleifen eines Lüfterrades aufgrund von Schmutzablagerungen oder bei einer Wasserdurchfahrt. In allen Fällen wird grundsätzlich von einer Schwergängigkeit bzw. einer Überlastung gesprochen, die zum Schutz des Motors und der Elektronik erkannt werden muss.

Es ist bekannt, die Schwergängigkeit von Motoren durch eine Strommessung zu erkennen. Nachteilig ist, dass hierzu ein Stromsensor erforderlich ist. Der Stromsensor bedeutet einen unerwünschten Kostenaufwand. Zudem kann der Stromsensor ausfallen.

Das Erkennen von Überlast anhand von Strommessungen wird in EP 0 432 747 beschrieben. Die Verwendung von Gebläse-Kennlinien zur Regelung der motorleistung wird in EP 1 039 139 vorgeschlagen.

Hiervon ausgehend liegt der Erfindung die Aufgabe zugrunde, ein Verfahren bereitzustellen, das eine Überlastung eines elektrischen Antriebsmotors zuverlässig und kostengünstig erkennt.

Diese Aufgabe wird erfindungsgemäß gelöst durch ein Verfahren mit den Merkmalen des Anspruches 1.

Der Kern der Erfindung besteht darin, dass eine Überlastung des elektrischen Antriebsmotors berechnet wird, ohne dass eine Strommessung erforderlich ist. Der Einsatz eines Stromsensors entfällt somit, wodurch Kosten eingespart werden und auch die Zuverlässigkeit der Erkennung einer Überlastung erhöht wird. Zur Erkennung einer Überlast des Antriebsmotors wird zunächst der Soll-Arbeitspunkt $A_{soll}$ des elektrischen Antriebsmotors berechnet, der einem Soll-Last-Drehmoment $M_{Lsoll}$ zugeordnet ist. Der Soll-Arbeitspunkt $A_{soll}$ stellt den gewünschten Betriebspunkt des Antriebsmotors dar. Anschließend wird ein Ist-Arbeitspunkt $A_{ist}$ des elektrischen Antriebmotors berechnet, der einem Ist-Last-Drehmoment $M_{List}$ zugeordnet ist. Durch das Vergleichen des Ist-Arbeitspunktes $A_{ist}$ mit dem Soll-Arbeitspunkt $A_{soll}$ können Abweichungen des Ist-Arbeitspunktes $A_{ist}$ von dem Soll-Arbeitspunkt $A_{soll}$ erkannt werden. Diese Abweichungen werden anschließend bewertet und es wird erkannt, ob eine Abweichung des Ist-Arbeitspunktes $A_{ist}$ von dem Soll-Arbeitspunkt $A_{soll}$ eine Überlast des Antriebsmotors darstellt und somit kritisch ist oder nicht. Wird eine Abweichung als kritisch erkannt, können geeignete Gegenmaßnahmen eingeleitet werden, beispielsweise ein zeitweises Abschalten des Antriebsmotors.

Eine Weiterbildung nach Anspruch 2 erlaubt das Bewerten der Abweichung des Ist-Arbeitspunktes $A_{ist}$ von dem Soll-Arbeitspunkt $A_{soll}$ anhand der Abweichung der berechneten Soll-Drehzahl $N_{soll}$ von der berechneten Ist-Drehzahl $N_{ist}$. Unterschreitet die Ist-Drehzahl $N_{ist}$ die Soll-Drehzahl $N_{soll}$ um einen bestimmten Werft, so liegt eine Überlastung des Antriebsmotors vor. Die Soll-Drehzahl $N_{soll}$ und die Ist-Drehzahl $N_{ist}$ können leicht berechnet werden.

Eine Weiterbildung nach Anspruch 3 erlaubt das Bewerten der Abweichung des Ist-Arbeitspunktes $A_{ist}$ von dem Soll-Arbeitspunkt $A_{soll}$ anhand der Abweichung des berechneten Soll-Stroms $I_{soll}$ von dem berechneten Ist-Strom $I_{ist}$. Überschreitet der Ist-Strom $I_{ist}$ den Soll-Strom $I_{soll}$ um einen bestimmten Wert, so wird eine Überlast des Antriebsmotors erkannt. Das Implementieren dieses Verfahrens in eine die Strommessung nach dem Stand der Technik auswertende Software-Struktur ist leicht möglich.

Eine Ausgestaltung nach den Ansprüchen 4 und 5 ermöglicht eine Berechnung des Soll-Stroms $I_{soll}$ und des Ist-Strom $I_{ist}$.

Eine Ausführungsform nach Anspruch 6 führt zu einer einfachen und präzisen Bestimmung der Soll-Drehzahl $N_{soll}$, indem für die stationäre Berechnung der Soll-Drehzahl $N_{soll}$ der Schnittpunkt der Drehzahl/Drehmoment-Kennlinien der Arbeitsmaschine und des Antriebsmotors bestimmt wird.

Eine Weiterbildung nach Anspruch 7 führt zu einer sehr genauen Berechnung der Soll-Drehzahl $N_{soll}$.

Eine Ausgestaltung nach Anspruch 8 erlaubt eine rechenzeitoptimale Implementierung der Kennlinien in einen Mikrocomputer.

Eine Ausführungsform nach Anspruch 9 oder 10 erlaubt eine einfache Berechnung der Arbeitspunkte.

Nachfolgend wird die Erfindung anhand von Ausführungsbeispielen in Verbindung mit den Zeichnungen näher beschrieben. Dabei zeigen:

Fig. 1   den prinzipiellen Aufbau eines Kühlerlüftersystems mit einem Gleichstromnebenschluss-Motor zum Antreiben eines Lüfterrades,

Fig. 2   eine Schar von Drehzahl/Last-Drehmoment-Kennlinien $N(M_L)$ in Abhängigkeit von einer Lufttemperatur $T_L$,

Fig. 3    eine Drehzahl/Antriebs-Drehmoment-Kennlinie $N(M_A)$ und eine Strom/Antriebs-Drehmoment-Kennlinie $I(M_A)$ des Antriebsmotors,

Fig. 4    ein Drehzahl/Drehmoment-Diagramm zum Berechnen einer Soll- Drehzahl $N_{soll}$ und einer Ist-Drehzahl $N_{ist}$ gemäß einem ersten Aus- führungsbeispiel, und

Fig. 5    ein Strom/Drehmoment-Diagramm zum Berechnen eines Soll- Stromes $I_{soll}$ und eines Ist-Stroms $I_{ist}$ gemäß einem zweiten Ausfüh- rungsbeispiel.

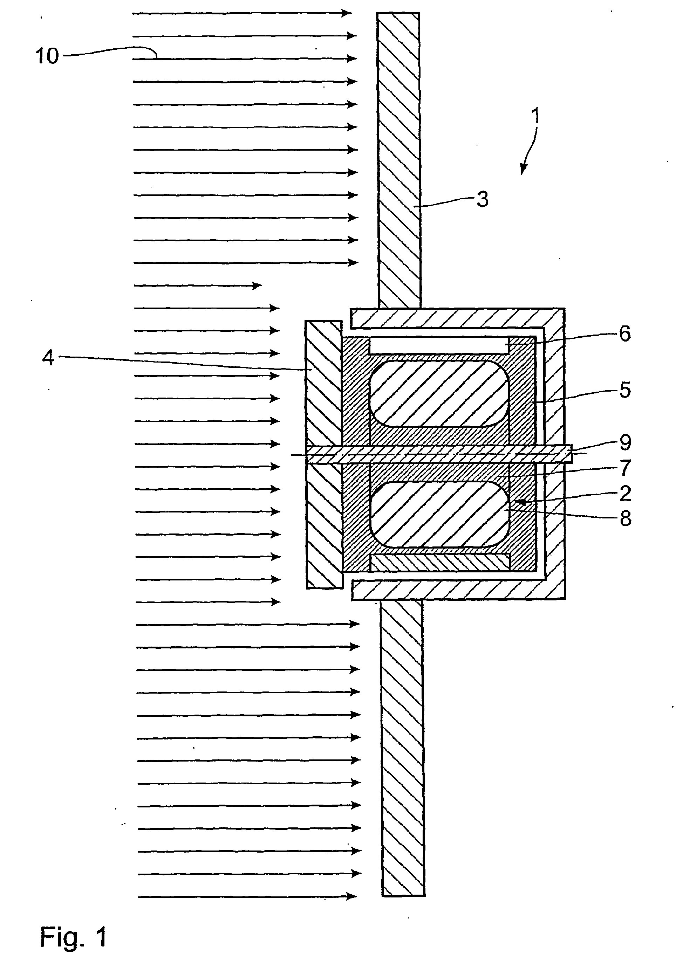

In Figur 1 ist ein als Ganzes mit 1 bezeichnetes Kühlerlüftersystem eines Kraftfahrzeuges dargestellt. Das Kühlerlüftersystem 1 umfasst einen elektrischen Antriebsmotor 2 mit Gleichstromnebenschluss-Verhalten, eine Arbeitsmaschine 3 in Form eines Lüfterrades und eine Ansteuer-Elektronik 4 zum Ansteuern des Antriebsmotors 2. Der Antriebsmotor 2 wird im Folgenden als Gleichstrommotor bezeichnet. Der Gleichstrommotor 2 ist permanent erregt und weist auf einem Stator 5 Permanentmagnete 6 sowie auf einem Rotor 7 stromdurchflossene Wicklungen 8 auf. Der Gleichstrommotor 2 treibt eine Welle 9 an, an der das Lüfterrad 3 befestigt ist. Durch die Drehung des Lüfterrades 3 wird ein Luftstrom 10 erzeugt, der einen Verbrennungsmotor des Kraftfahrzeuges kühlt. Die Ansteuer-Elektronik 4 ist im Luftstrom 10 angeordnet und an dem Gleichstrommotor 2 befestigt. Sowohl die Ansteuer-Elektronik 4 als auch der Gleichstrommotor 2 werden von dem Luftstrom 10 gekühlt. Die Ansteuer-Elektronik 4, die sich aufgrund einer Verlustleistung erhitzt, weist eine Temperatur $T_E$ auf, die mittels eines nicht näher dargestellten Temperatursensors gemessen wird. Die Temperatur des Luftstromes 10, in dem sich das Lüfterrad 3 bewegt, wird als Lufttemperatur $T_L$ bezeichnet. Der Gleichstrommotor 2 weist eine von seiner Belastung abhängige Temperatur $T_W$ der Wicklungen 8 und eine von seiner Belastung abhängige Temperatur $T_M$ der Permanentmagnete 6 auf.

Das Lüfterrad 3 stellt für den Gleichstrommotor 2 eine Last dar, wobei der Gleichstrommotor 2 zum Antreiben des Lüfterrades 3 ein Drehmoment aufbringen muss. Das stationäre Verhalten des Lüfterrades 3 wird durch eine Last- Drehmoment/Drehzahl-Kennlinie $M_L(N)$ beschrieben. Die Last-Drehmoment/Drehzahl-Kennlinie $M_L(N)$ beschreibt den Zusammenhang zwischen dem Last-Drehmoment $M_L$ und der Drehzahl N des Lüfterrades 3, das heißt welches Last- Drehmoment $M_L$ erforderlich ist, um das Lüfterrad 3 mit einer konstanten Drehzahl N rotieren zu lassen. Zusätzlich ist die Last-Drehmoment/Drehzahl-Kennlinie $M_L(N)$ von der Lufttemperatur $T_L$ des Luftstromes 10 abhängig, da die Luftdichte bei steigender Temperatur $T_L$ abnimmt und somit für das Lüfterrad 3 einen geringeren Widerstand darstellt. Somit ergeben sich in Abhängigkeit der Lufttemperatur $T_L$ eine Vielzahl von Last-Drehmoment/Drehzahl-Kennlinien $M_L(N, T_L)$ des Lüfterrades 3. Diese Schar von Kennlinien kann allgemein durch die Funktion

$$M_L(N, T_L) = N^2 \cdot a \cdot K_L(T_L)$$

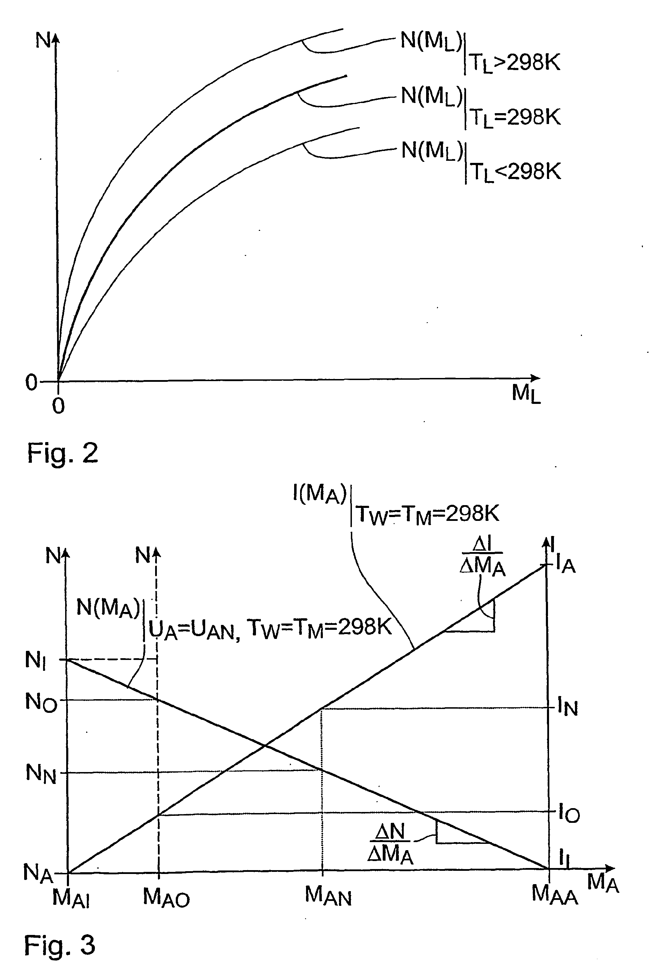

beschrieben werden. $M_L$ bezeichnet dabei das Last-Drehmoment, N die Drehzahl, a eine geometrieabhängige Konstante und $K_L$ einen temperaturabhängigen Korrekturfaktor des Lüfterrades 3. In der Praxis weist die geometrieabhängige Konstante a Werte zwischen $1 \cdot 10^{-6}$ Ncm·min$^2$ und $1 \cdot 10^{-4}$ Ncm auf. Der temperaturabhängige Korrekturfaktor $K_L$ berechnet sich zu

$$K_L(T_L) = \frac{298K}{T_L}$$

und ist bei einer Lufttemperatur $T_L$ von 298 K (entspricht 25° C) gleich 1. Wird die obige Gleichung der Last-Drehmoment/ Drehzahl-Kennlinien $M_L(N, T_L)$ nach der Drehzahl N aufgelöst, ergibt sich eine Schar von Drehzahl/Last-Drehmoment- Kennlinien $N(M_L, T_L)$, welche wiederum von der Lufttemperatur $T_L$ des Luftstromes 10 abhängig ist. In Figur 2 ist eine Drehzahl/Last-Drehmoment-Kennlinie $N(M_L)$ bei einer Lufttemperatur $T_L$ von 298 K dargestellt. Mit zunehmender Drehzahl N wird das Last-Drehmoment $M_L$ überproportional größer. Drehzahl/Last-Drehmoment-Kennlinien mit einer Lufttemperatur $T_L$ von > 298 K verlaufen oberhalb und Drehzahl/Last-Drehmoment-Kennlinien mit einer Lufttemperatur $T_L$ von < 298 K verlaufen unterhalb dieser Kennlinie. Die Schar von Last-Drehmoment/Drehzahl-Kennlinien $M_L(N, T_L)$ wird vor dem Einbau des Kühlerlüftersystems 1 in das Kraftfahrzeug an einem Drehmomentprüfstand ermittelt.

Die Lufttemperatur $T_L$ wird in dem Kühlerlüftersystem 1 nicht direkt gemessen, sondern muss aus der gemessenen Temperatur $T_E$ der Ansteuer-Elektronik 4 berechnet werden. Hierbei muss die Verlustleistung, der thermische Widerstand und die thermische Zeitkonstante der Ansteuer-Elektronik 4 berücksichtigt werden. Die Lufttemperatur $T_L$

kann jedoch auch gemessen werden.

Das stationäre Verhalten des Gleichstrommotors 2 wird durch eine Antriebs-Drehmoment/Drehzahl-Kennlinie $M_A(N)$ und eine Strom/Antriebs-Drehmoment-Kennlinie $I(M_A)$ beschrieben. Die Antriebs-Drehmoment/Drehzahl-Kennlinie $M_A(N)$ des Gleichstrommotors 2 ist linear und beschreibt, welches Antriebs-Drehmoment $M_A$ der Gleichstrommotor 2 bei einer bestimmten Drehzahl N aufbringt. Die Strom/Antriebs-Drehmoment-Kennlinie $I(M_A)$ des Gleichstrommotors 2 ist ebenfalls linear und beschreibt, welcher Strom I für die Erzeugung des Antriebs-Drehmoments $M_A$ in dem Gleichstrommotor 2 erforderlich ist. Wird die Antriebs-Drehmoment/Drehzahl-Kennlinie $M_A(N)$ umgerechnet und die Drehzahl N in Abhängigkeit von dem Antriebs-Drehmoment $M_A$ dargestellt, ergibt sich die Drehzahl/Antriebs-Drehmoment-Kennlinie $N(M_A)$ des Gleichstrommotors 2. Die Drehzahl/Antriebs-Drehmoment-Kennlinie $N(M_A)$ und die Strom/Antriebs-Drehmoment-Kennlinie $I(M_A)$ des Gleichstrommotors 2 sind in Figur 3 in einem Diagramm dargestellt. Die Kennlinien beschreiben das stationäre Betriebsverhalten des Gleichstrommotors 2 bei einer Spannung $U_A = U_{AN}$ und den Temperaturen $T_W = T_M = 298$ K. Auf die Spannung $V_A$ sowie die Temperaturen $T_W$ und $T_M$ wird später genauer eingegangen. In Figur 3 sind vier stationäre Betriebspunkte des Gleichstrommotors 2 gekennzeichnet. Der Betriebspunkt mit dem Index I kennzeichnet den idealen Leerlauf des Gleichstrommotors 2. Dieser Betriebspunkt ist durch die Drehzahl $N_I$, das Antriebs-Drehmoment $M_{AI} = 0$ Ncm und den Strom $I_I = 0$ A charakterisiert. Das bedeutet, dass im idealen Leerlauf die Drehzahl des Gleichstrommotors maximal ist, da er kein Antriebs-Drehmoment aufbringen muss und infolge dessen kein Strom in der Gleichstrommaschine 2 fließt. Der ideale Leerlauf ist in der Realität nicht erreichbar. Der Betriebspunkt mit dem Index 0 bezeichnet den tatsächlichen Leerlauf des Gleichstrommotors 2. Der tatsächliche Leerlauf ist durch die Drehzahl $N_0$, das Antriebs-Drehmoment $M_{A0}$ und den Strom $I_0$ charakterisiert. Im tatsächlichen Leerlauf ist der Gleichstrommotor 2 nicht mit einer Arbeitsmaschine 3 gekoppelt, jedoch muss der Gleichstrommotor 2 ein geringfügiges Antriebs-Drehmoment $M_{A0}$ aufbringen, um die Lagerreibung und den Luftwiderstand bei der Drehung des Rotors 7 zu überwinden. Infolge dessen fließt in dem Gleichstrommotor ein Strom $I_0$. Der Betriebspunkt mit dem Index N bezeichnet den Nenn-Betriebspunkt des Gleichstrommotors 2. Er ist charakterisiert durch die Nenn-Drehzahl $N_N$, das Nenn-Antriebs-Drehmoment $M_{AN}$ und den Nenn-Strom $I_N$. Im Nenn-Betriebspunkt wird der Gleichstrommotor 2 mit seiner Nenn-Last betrieben. Der Betriebspunkt mit dem Index A bezeichnet den Anlaufpunkt des Gleichstrommotors 2. Im Anlaufpunkt befindet sich der Gleichstrommotor 2 im Stillstand, das heißt die Anlauf-Drehzahl $N_A = 0$. Das Anlauf-Antriebs-Drehmoment $M_{AA}$ ist im Anlaufpunkt maximal. Infolge dessen ist auch der Strom $I_A$ durch den Gleichstrommotor 2 maximal.

Nachfolgend wird lediglich der Teil des Antriebs-Drehmoments $M_A$ betrachtet, der tatsächlich auf das mit dem Gleichstrommotor 2 gekoppelte Lüfterrad 3 wirkt. Für die Drehzahl/Antriebs-Drehmoment-Kennlinie $N(M_A)$ und die Strom/Antriebs-Drehmoment-Kennlinie $I(M_A)$ aus Figur 3 bedeutet dies eine Verschiebung entlang der Antriebs-Drehmoment-Achse $M_A$. Die auf das Lüfterrad 3 bezogene Drehzahl-Achse N ist in Figur 3 gestrichelt dargestellt. Bezogen auf das Lüfterrad 3 ist im tatsächlichen Leerlauf das auf das Lüfterrad 3 wirkende Antriebs-Drehmoment $M_{A0} = 0$ und die Strom/Antriebs-Drehmoment-Kennlinie $I(M_A)$ ist keine Ursprungsgerade.

Die Drehzahl/Antriebs-Drehmoment-Kennlinie $N(M_A)$ kann bezogen auf das Lüfterrad 3 mathematisch in Form von folgender Geradengleichung dargestellt werden:

$$N(M_A) = \frac{\Delta N}{\Delta M_A} \cdot M_A + N_0$$

Der Term $\Delta N / \Delta M_A$ stellt die Steigung der Drehzahl/Antriebs-Drehmoment-Kennlinie $N(M_A)$ dar. Die Steigung wird aus der Messung zweier Betriebspunkte, beispielsweise dem realen Leerlauf und dem Nenn-Betriebspunkt, ermittelt. Der Achsenabschnitt $N_0$ der Geradengleichung wird aus der Messung des realen Leerlaufs ermittelt. Die Strom/Antriebs-Drehmoment-Kennlinie $I(M_A)$ kann in Form von folgender Geradengleichung dargestellt werden:

$$I(M_A) = \frac{\Delta I}{\Delta M_A} \cdot M_A + I_0$$

Der Term $\Delta I / \Delta M_A$ bezeichnet die Steigung der Strom/Antriebs-Drehmoment-Kennnlinie $I(M_A)$. Die Steigung wird aus der Messung zweier Betriebspunkte, beispielsweise dem realen Leerlauf und dem Nenn-Betriebspunkt, ermittelt. Der Achsenabschnitt $I_0$ der Strom/Antriebs-Drehmoment-Kennlinie $I(M_A)$ wird ebenfalls aus der Messung des realen Leerlaufs ermittelt.

Die Drehzahl/Antriebs-Drehmoment-Kennlinie $N(M_A)$ und die Strom/Antriebs-Drehmoment-Kennlinie $I(M_A)$ sind weiterhin abhängig von der Spannung $U_A$, die an die Wicklungen 8 des Gleichstrommotors 2 angelegt wird, und von den Temperaturen $T_W$ und $T_M$ des Gleichstrommotors 2. Das bedeutet, dass die Kennlinien aus Figur 3 das Verhalten des Gleichstrommotors 2 lediglich bei einer bestimmten Spannung $U_A$ und bestimmten Temperaturen $T_W$ und $T_M$ exakt beschreiben. In Figur 3 ist die Spannung $U_A$ gleich der Nenn-Spannung $U_{AN}$ und die Temperaturen $T_W = T_M = 298$ K. Zur Bestimmung der Kennlinien aus Figur 3 wird der Gleichstrommotor 2 demzufolge an zwei Betriebspunkten bei konstanten Temperaturen $T_W = T_M = 298$ K und bei einer konstanten Spannung $U_A = U_{AN}$ vermessen. Die Nenn-Spannung $U_{AN}$ des Gleichstrommotors 2 beträgt 13V. Die Spannung $U_A$ wird an dem Kollektor des Gleichstrommotors 2 gemessen. Die Temperatur $T_W$ des Gleichstrommotors 2 kennzeichnet die Temperatur der Wicklungen 8 und die Temperatur $T_M$ kennzeichnet die Temperatur der Permanentmagnete 6. Die Temperaturen $T_W$ und $T_M$ werden nach dem Einbau des Kühlerlüftersystems 1 in das Kraftfahrzeug nicht mehr gemessen, sondern aus der Temperatur $T_L$ des Luftstromes 10, der Verlustleistung des Gleichstrommotors 2, dem Widerstand $R_A$ der Wicklungen 8 und der thermischen Zeitkonstante des Gleichstrommotors 2 berechnet.

Wird die Abhängigkeit von der Spannung $U_A$ und der Temperaturen $T_W$ und $T_M$ in den Kennlinien des Gleichstrommotors 2 berücksichtigt, so ergeben sich allgemein folgende Gleichungen:

$$N(M_A, U_A, T_M, T_W) = \frac{\Delta N}{\Delta M_A}(T_M, T_W) \cdot M_A + N_0(U_A, T_M)$$

$$I(M_A, U_A, T_M, T_W) = \frac{\Delta I}{\Delta M_A}(T_M) \cdot M_A + I_0(U_A, T_W)$$

Zunächst wird die Abhängigkeit von der Spannung $U_A$ bei konstanten Temperaturen $T_W = T_M = 298$ K untersucht. Die Abhängigkeit der Drehzahl/Antriebs-Drehmoment-Kennlinie $N(M_A)$ von der Spannung $U_A$ besteht darin, dass die reale Leerlauf-Drehzahl $N_0$ von der Spannung $U_A$ abhängig ist. Die Steigung der Drehzahl/Antriebs-Drehmoment-Kennlinie $N(M_A)$ ist unabhängig von der Spannung $U_A$. Die Spannung $U_A$ geht direkt proportional in die reale Leerlauf-Drehzahl $N_0$ ein. In Bezug auf die Drehzahl/Antriebs-Drehmoment-Kennlinie aus Figur 3 bedeutet dies, dass, wenn die Spannung $U_A$ lediglich $0{,}5 \cdot U_{AN}$ beträgt, die reale Leerlauf-Drehzahl nur $0{,}5 \cdot N_0$ ist. Eine Änderung der Spannung $U_A$ führt somit zu einer Parallelverschiebung der Drehzahl/Antriebs-Drehmoment-Kennlinie aus Figur 3 entlang der N-Achse. Die spannungsabhängige Drehzahl/Antriebs-Drehmoment-Kennlinie $N(M_A, U_A)$ wird mathematisch durch folgende Gleichung beschrieben:

$$N(M_A, U_A) = \frac{\Delta N}{\Delta M_A} \cdot M_A + N_0 \cdot \frac{U_A}{U_{AN}}$$

Die Abhängigkeit der Strom/Antriebs-Drehmoment-Kennlinie $I(M_A)$ von der Spannung $U_A$ besteht ebenfalls darin, dass der Achsenabschnitt $I_0$ von der Spannung $U_A$ abhängig ist. Die Spannung $U_A$ geht direkt proportional in den Strom $I_0$ ein. Eine Änderung der Spannung $U_A$ führt somit zu einer Parallelverschiebung der Strom/Antriebs-Drehmoment-Kennlinie aus Figur 3 entlang der I-Achse. Die spannungsabhängige Strom/Antriebs-Drehmoment-Kennlinie $I(M_A, U_A)$ wird mathematisch durch folgende Gleichung beschrieben:

$$I(M_A, U_A) = \frac{\Delta I}{\Delta M_A} \cdot M_A + I_0 \cdot \frac{U_A}{U_{AN}}$$

Nachfolgend wird die Abhängigkeit der Kennlinien aus Figur 3 von den Temperaturen $T_W$ und $T_M$ bei konstanter Spannung $U_A = U_{AN}$ untersucht. In dem Gleichstrommotor 2 ist der ohmsche Widerstand der Wicklungen 8 und der magnetische Fluss der Permanentmagnete 6 temperaturabhängig. Die Wicklungen 8 werden aus Kupfer hergestellt, womit sich für den temperaturabhängigen ohmschen Widerstand $R_A$ der Wicklungen 8 folgende Gleichung ergibt:

$$R_A(T_W) = R_A(298K) \cdot [1 + 0{,}0039 \cdot (T_W - 298K)] = R_A(298K) \cdot K_R(T_W)$$

Die obige Gleichung beschreibt die Korrektur des ohmschen Widerstandes der Wicklungen 8 bei einer Temperatur $T_W$ von 298 K. Der Korrekturfaktor $K_R(T_W)$ ist temperaturabhängig.

Bei einer Verwendung von Ferriten als Magnetmaterial wird die Temperaturabhängigkeit des magnetischen Flusses durch folgende Gleichung beschrieben:

$$\Phi(T_M) = \Phi(298K) \cdot [1 + 0{,}002 \cdot (298K - T_M)] = \Phi(298K) \cdot K_\Phi(T_M)$$

Die obige Gleichung beschreibt die Korrektur des magnetischen Flusses $\Phi$ bei einer Temperatur $T_M$ von 298 K. Der Korrekturfaktor $K_\Phi(T_M)$ ist temperaturabhängig.

Die Steigung der Drehzahl/Antriebs-Drehmoment-Kennlinie aus Figur 3 ist direkt proportional zum ohmschen Widerstand $R_A$ der Wicklungen 8, das heißt $\Delta N/\Delta M_A \sim R_A$. Weiterhin ist die Steigung der Drehzahl/Antriebs-Drehmoment-Kennlinie aus Figur 3 umgekehrt proportional zum Quadrat des magnetischen Flusses, das heißt $\Delta N/\Delta M_A \sim 1/\Phi^2$. Die reale Leerlauf-Drehzahl $N_0$ ist unabhängig vom ohmschen Widerstand $R_A$ der Wicklungen 8. Die reale Leerlauf-Drehzahl $N_0$ ist jedoch umgekehrt proportional abhängig vom magnetischen Fluss $\Phi$, das heißt $N_0 \sim 1/\Phi$. In der Drehzahl/Antriebs-Drehmoment-Kennlinie $N(M_A)$ aus Figur 3 ist bereits der Einfluss des ohmschen Widerstandes $R_A$ der Wicklungen 8 und der Einfluss des magnetischen Flusses $\Phi$ bei einer Temperatur $T_W = T_M$ von 298 K enthalten, sodass zur Berücksichtigung der Temperaturabhängigkeit lediglich die Korrekturterme $K_R(T_W)$ und $K_\Phi(T_M)$ in die Drehzahl/Antriebs-Drehmoment-Kennlinie $N(M_A)$ aus Figur 3 eingeführt werden müssen. Unter Berücksichtigung der Proportionalitätsbeziehungen ergibt sich für die temperaturabhängige Drehzahl/Antriebs-Drehmoment-Kennlinie folgende Gleichung:

$$N(M_A, T_M, T_W) = \frac{\Delta N}{\Delta M_A} \cdot \frac{K_R(T_W)}{K_\Phi(T_M)^2} \cdot M_A + N_0 \cdot \frac{1}{K_\Phi(T_M)}$$

Die Steigung der Strom/Antriebs-Drehmoment-Kennlinie $I(M_A)$ aus Figur 3 ist unabhängig von dem ohmschen Widerstand $R_A$ der Wicklungen 8. Jedoch ist die Steigung umgekehrt proportional zu dem magnetischen Fluss, das heißt $\Delta I/\Delta M_A \sim 1/\Phi$. Der Achsenabschnitt $I_0$ der Strom/Antriebs-Drehmoment-Kennlinie $I(M_A)$ aus Figur 3 ist umgekehrt proportional zu dem ohmschen Widerstand $R_A$ der Wicklungen 8, das heißt $I_0 \sim 1/R_A$. Der Achsenabschnitt $I_0$ ist unabhängig vom magnetischen Fluss. In der Strom/Antriebs-Drehmoment-Kennlinie $I(M_A)$ aus Figur 3 ist bereits der Einfluss des ohmschen Widerstandes $R_A$ und des magnetischen Flusses $\Phi$ bei einer Temperatur $T_W = T_M$ von 298 K berücksichtigt. Zur Berücksichtigung der Temperaturabhängigkeit müssen in die Strom/Antriebs-Drehmoment-Kennlinie $I(M_A)$ die Korrekturterme $K_R(T_W)$ und $K_\Phi(T_M)$ eingerührt werden. Für die temperaturabhängige Strom/Antriebs-Drehmoment-Kennlinie ergibt sich somit:

$$I(M_A, T_M, T_W) = \frac{\Delta I}{\Delta M_A} \cdot \frac{1}{K_\Phi(T_M)} \cdot M_A + I_0 \cdot \frac{1}{K_R(T_W)}$$

Wird nun die Abhängigkeit von der Spannung $U_A$ und den Temperaturen $T_W$ und $T_M$ berücksichtigt, ergeben sich für die spannungs- und temperaturabhängige Drehzahl/Antriebs-Drehmoment-Kennlinie und Strom/Antriebs-Drehmoment-Kennlinie des Gleichstrommotors 2 folgende Gleichungen:

$$N\left(M_A, U_A, T_M, T_W\right) = \frac{\Delta N}{\Delta M_A} \cdot \frac{K_R\left(T_W\right)}{K_\Phi\left(T_M\right)^2} \cdot M_A + N_0 \cdot \frac{U_A}{U_{AN}} \cdot \frac{1}{K_\Phi\left(T_M\right)}$$

$$I\left(M_A, U_A, T_M, T_W\right) = \frac{\Delta I}{\Delta M_A} \cdot \frac{1}{K_\phi\left(T_M\right)} \cdot M_A + I_0 \cdot \frac{U_A}{U_{AN}} \cdot \frac{1}{K_R\left(T_W\right)}$$

Mit der spannungs- und temperaturabhängigen Drehzahl/Antriebs-Drehmoment-Kennlinie $N(M_A,U_A,T_M,T_W)$ und der spannungs- und temperaturabhängigen Strom/Antriebs-Drehmoment-Kennlinie $I(M_A,U_A,T_M,T_W)$ ist das Betriebsverhalten des Gleichstrommotors 2 sehr präzise in Abhängigkeit von der Spannung $U_A$ und den Temperaturen $T_W$ und $T_M$ bekannt. Diese Kennlinien des Gleichstrommotors 2 müssen vor dem Einbau des Kühlerlüftersystems 1 bei $U_A = U_{AN}$ und $T_W = T_M = 298$ K ermittelt werden.

Zur Bestimmung der Belastung des Gleichstrommotors 2 müssen die spannungs- und temperaturabhängigen Kennlinien des Gleichstrommotors 2 in einer Speicher- und Recheneinheit im Kraftfahrzeug gespeichert und verarbeitet werden. Da die Rechenkapazität in einem Kraftfahrzeug aus Kostengründen begrenzt ist, muss der Rechenaufwand bei der Auswertung der Kennlinien minimiert werden, insbesondere Divisionen erfordern einen hohen Rechenaufwand. Aus diesem Grund ist es vorteilhaft, die Terme $K_R(T_W)/(K_\Phi(T_M))^2$, $1/K_R(T_W)$ und $1/K_\Phi(T_M)$ als Polynome, insbesondere als quadratische Gleichungen, in Abhängigkeit von der Temperatur $T_A$ zu beschreiben. Somit kann der Rechenaufwand deutlich reduziert werden.

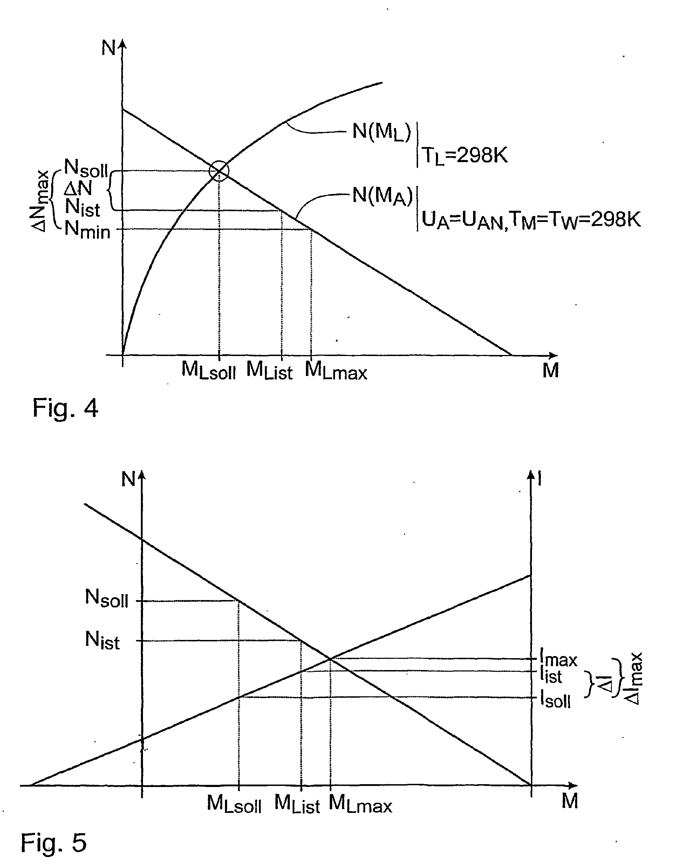

Nachfolgend wird ein Verfahren gemäß einem ersten Ausführungsbeispiel zur Bestimmung der Belastung des mit dem Lüfterrad 3 gekoppelten Gleichstrommotors 2 beschrieben. Zunächst muss ein Soll-Arbeitspunkt $A_{soll}$ des Gleichstrommotors 2 berechnet werden, wobei der Soll-Arbeitspunkt einem Soll-Last-Drehmoment $M_{Lsoll}$ zugeordnet ist. Der Soll-Arbeitspunkt $A_{soll}$ ist durch eine Soll-Drehzahl $N_{soll}$ des Gleichstrommotors 2 charakterisiert, die aus der spannungs- und temperaturabhängigen Drehzahl/Antriebs-Drehmoment-Kennlinie $N(M_A,U_A,T_M,T_W)$ und der temperaturabhängigen Drehzahl/Last-Drehmoment-Kennlinie $N(M_L,T_L)$ berechnet wird. Für den Soll-Arbeitspunkt $A_{soll}$ gilt, dass das auf das Lüfterrad 3 bezogene Antriebs-Drehmoment $M_A$ gleich dem Last-Drehmoment $M_L$ ist, das heißt $M_A = M_L = M_{Lsoll}$. Der mit dem Lüfterrad 3 gekoppelte Gleichstrommotor 2 weist somit eine konstante Soll-Drehzahl $N_{soll}$ auf. Figur 4 zeigt die Drehzahl/Last-Drehmoment-Kennlinie $N(M_L)$ bei einer Lufttemperatur $T_L$ von 298 K und die Drehzahl/Antriebs-Drehmoment-Kennlinie $N(M_A)$ bei der Nenn-Spannung $U_{AN}$ und einer Temperatur $T_W = T_M$ von 298 K. Die gesuchte Soll-Drehzahl $N_{soll}$ bei der Momentengleichgewicht herrscht, ergibt sich als Schnittpunkt der beiden Kennlinien. Rechnerisch wird die Soll-Drehzahl $N_{soll}$ dadurch ermittelt, dass das Soll-Last-Drehmoment $M_{Lsoll} = M_A = M_L$ aus der Drehzahl/ Antriebs-Drehmoment-Kennlinie und der Drehzahl/Last-Drehmoment-Kennlinie eliminiert wird. Es ergibt sich eine Gleichung zweiter Ordnung in Abhängigkeit der Soll-Drehzahl $N_{soll}$, aus der die Soll-Drehzahl $N_{soll}$ berechnet wird. Die Soll-Drehzahl $N_{soll}$ ist dem Soll-Last-Drehmoment $M_{Lsoll}$ zugeordnet.

Anschließend wird ein Ist-Arbeitspunkt $A_{ist}$ des Gleichstrommotors 2 berechnet, der durch eine Ist-Drehzahl $N_{ist}$ des Gleichstrommotors 2 charakterisiert ist. Der Ist-Arbeitspunkt $A_{ist}$ ist einem Ist-Last-Drehmoment $M_{List}$ zugeordnet. Die Ist-Drehzahl $N_{ist}$ wird in Abhängigkeit von der induzierten Gegenspannung $U_{EMK}$ und der Temperatur $T_M$ berechnet. Für die Ist-Drehzahl ergibt sich:

$$N_{ist}\left(U_{EMK}, T_M\right) = N_I \cdot \frac{U_{EMK}}{U_{AN}} \cdot \frac{1}{K_\Phi\left(T_M\right)}$$

Die Berechnung der Ist-Drehzahl $N_{ist}$ ist möglich, indem der Gleichstrommotor 2 kurzzeitig bis zum völligen Abbau des Stromes I abgeschaltet wird und im stromlosen Zustand die vom drehenden Gleichstrommotor 2 induzierte Gegenspannung $U_{EMK}$ gemessen wird. Für die ideale Leerlaufdrehzahl $N_I$ muss in obiger Gleichung die ideale Leerlaufdrehzahl bei Nennspannung $I_{AN}$ eingesetzt werden. Aus einem Vergleich der Soll-Drehzahl $N_{soll}$ und der Ist-Drehzahl $N_{ist}$ kann nun die Drehzahl-Abweichung $\Delta N = N_{ist} - N_{soll}$ bestimmt werden. Die Drehzahl-Abweichung $\Delta N$ muss anschließend bewertet werden, um zu erkennen, ob eine Überlastung des Gleichstrommotors 2 vorliegt. Ist $\Delta N$ positiv, bedeutet dies, dass eine Drehzahlerhöhung durch Antreiben des Gleichstrommotors 2 vorliegt.

Dieser Zustand ist unkritisch. Ist die Drehzahl-Abweichung $\Delta N$ negativ, bedeutet dies, dass eine Drehzahlabsenkung aufgrund einer Schwergängigkeit, das heißt einer zu großen Belastung, vorliegt. Wird eine kritische Grenze $\Delta N_{max} = N_{min} - N_{soll}$ unterschritten, ist eine Überlastung, das heißt $M_{List} > M_{Lmax}$, des Gleichstrommotors 2 vorhanden, die dauerhaft zu einer Beschädigung des Gleichstrommotors 2 führt. Überlastung bedeutet, dass durch den Gleichstrommotor 2 ein zu großer Strom fließt. In diesem Fall müssen Gegenmaßnahmen, wie beispielsweise eine Abschaltung des Gleichstrommotors 2, durchgeführt werden.

Nachfolgend wird ein Verfahren gemäß einem zweiten Ausführungsbeispiel zur Bestimmung der Belastung des mit dem Lüfterrades 3 gekoppelten Gleichstrommotors 2 beschrieben. Der Soll-Arbeitspunkt $A_{soll}$ ist durch einen berechneten Soll-Strom $I_{soll}$ des Gleichstrommotors 2 charakterisiert. Die Berechnung des Soll-Stromes $I_{soll}$ erfolgt in Abhängigkeit der Soll-Drehzahl $N_{soll}$. Die Soll-Drehzahl $N_{soll}$ wird entsprechend dem ersten Ausführungsbeispiel ermittelt. Mit der berechneten Soll-Drehzahl $N_{soll}$ wird zunächst das zugehörige Soll-Last-Drehmoment $M_{Lsoll}$ durch Einsetzen der Soll-Drehzahl in die Gleichung der Drehzahl/Antriebs-Drehmoment-Kennlinie ermittelt, das heißt es wird $M_{Lsoll} = M_A$ ($N_{soll}$) berechnet. Anschließend kann aus dem berechneten Soll-Last-Drehmoment $M_{Lsoll}$ der Soll-Strom $I_{soll}$ berechnet werden. Hierzu wird die Strom/Antriebs-Drehmoment-Kennlinie an der Stelle des Soll-Last-Drehmomentes ausgewertet, das heißt $I_{soll} = I(M_{Lsoll})$ berechnet.

Anschließend wird der Ist-Arbeitspunkt $A_{ist}$ des Gleichstrommotors 2 berechnet. Dem Ist-Arbeitspunkt $A_{ist}$ ist ein Ist-Last-Drehmoment $M_{List}$ zugeordnet. Die Berechnung des Ist-Stromes $I_{ist}$ erfolgt in Abhängigkeit der Ist-Drehzahl $N_{ist}$. Die Ist-Drehzahl $N_{ist}$ wird entsprechend dem ersten Ausführungsbeispiel berechnet. Anschließend wird das der Ist-Drehzahl $N_{ist}$ zugehörige Ist-Last-Drehmoment $M_{List}$ aus der Drehzahl/Antriebs-Drehmoment-Kennlinie berechnet, das heißt das Ist-Last-Drehmoment ergibt sich zu $M_{List} = M_A(N_{ist})$. Durch Auswerten der Strom/Antriebs-Drehmoment-Kennlinie an der Stelle des Ist-Last-Drehmomentes ergibt sich der zugehörige Ist-Strom $I_{ist}$, das heißt $I_{ist} = I(M_{List})$. Anschließend wird der Ist-Strom $I_{ist}$ mit dem Soll-Strom $I_{soll}$ verglichen, das heißt es wird $\Delta I = I_{ist} - I_{soll}$ gebildet. Ist $\Delta I$ negativ, so liegt keine Überlastung des Gleichstrommotors 2 vor. Im Gegensatz dazu liegt eine Überlastung des Gleichstrommotors 2 vor, wenn $\Delta I$ positiv ist. Überschreitet die Abweichung des Ist-Stromes von dem Soll-Strom eine kritische Grenze $\Delta I_{max}$, das heißt ist $I_{ist} > I_{max}$, müssen geeignete Gegenmaßnahmen ergriffen werden, um eine dauerhafte Beschädigung des Gleichstrommotors 2 zu verhindern.

Weiterhin kann bei einem spannungsbegrenzten Gleichstrommotor 2 auf eine Berechnung des Soll-Arbeitspunktes $A_{soll}$ verzichtet werden und der berechnete Ist-Arbeitspunkt $A_{ist}$ direkt mit einem vorgegebenen Soll-Arbeitspunkt $A_{soll}$ verglichen werden. Beispielsweise kann der berechnete Ist-Strom $I_{ist}$ direkt mit einem vorgegebenen Maximalstrom $I_{max}$ verglichen werden.

Eine Überlastung des Gleichstrommotors 2 kann somit ohne einen Stromsensor auf rein rechnerischem Wege erkannt werden. Durch die Berücksichtigung der Spannungs- und Temperaturabhängigkeit der Kennlinien erfolgt die Berechnung des Soll- und des Ist-Arbeitspunktes präzise und zuverlässig.

**Patentansprüche**

1. Verfahren zur Bestimmung der Belastung eines zum Antreiben mit einer Arbeitsmaschine (3) gekoppelten, elektrischen Antriebsmotors (2), umfassend die Schritte:

   a. Berechnen einer charakterisierenden Größe eines Soll-Arbeitspunktes $A_{soll}$ des elektrischen Antriebsmotors (2), wobei dem Soll-Arbeitspunkt $A_{soll}$ ein Soll-Last-Drehmoment $M_{Lsoll}$ zugeordnet ist und die Berechnung der charakterisierenden Größe aus der Gleichheit des Soll-Last-Drehmoments $M_{Lsoll}$ und eines Antriebs-Drehmoments $M_A$ anhand drehmomentabhängiger Kennlinien von Antriebsmotor (2) und Arbeitsmaschine (3) erfolgt,
   b. Berechnen einer charakterisierenden Größe eines Ist-Arbeitspunktes $A_{ist}$ des elektrischen Antriebsmotors (2), der einem Ist-Last-Drehmoment $M_{List}$ zugeordnet ist, aus einer im stromlosen Zustand des Motors gemessenen induzierten Gegenspannung,
   c. Vergleichen der charakterisierenden Größe des Ist-Arbeitspunktes $A_{ist}$ mit der charakterisierenden Größe des Soll-Arbeitspunktes $A_{soll}$, und
   d. Bewerten einer Abweichung der charakterisierenden Größe des Ist-Arbeitspunktes $A_{ist}$ von der charakterisierenden Größe des Soll-Arbeitspunktes $A_{soll}$ zum Erkennen einer Überlastung des elektrischen Antriebsmotors (2).

2. Verfahren nach Anspruch 1, **dadurch gekennzeichnet, dass** der Soll-Arbeitspunkt $A_{soll}$ durch eine berechnete Soll-Drehzahl $N_{soll}$ des Antriebsmotors (2) und der Ist-Arbeitspunkt $A_{ist}$ durch eine berechnete Ist-Drehzahl $N_{ist}$ des Antriebsmotors (2) charakterisiert ist.

3. Verfahren nach Anspruch 1, **dadurch gekennzeichnet, dass** der Soll-Arbeitspunkt $A_{soll}$ durch einen berechneten

Soll-Strom $I_{soll}$ des Antriebsmotors (2) und der Ist-Arbeitspunkt $A_{ist}$ durch einen berechneten Ist-Strom $I_{ist}$ des Antriebsmotors (2) charakterisiert ist.

4. Verfahren nach Anspruch 3, **dadurch gekennzeichnet, dass** der Soll-Strom $I_{soll}$ in Abhängigkeit von einer berechneten Soll-Drehzahl $N_{soll}$ des Antriebsmotors (2) und der Ist-Strom $I_{ist}$ in Abhängigkeit von einer berechneten Ist-Drehzahl $N_{ist}$ des Antriebsmotors (2) berechnet wird.

5. Verfahren nach Anspruch 4, **dadurch gekennzeichnet, dass** der Soll-Strom $I_{soll}$ und der Ist-Strom $I_{ist}$ aus einer Strom/Antriebs-Drehmoment-Kennlinie ($I(M_A)$ des Antriebsmotors (2) berechnet wird.

6. Verfahren nach einem der Ansprüche 2, 4, oder 5, **dadurch gekennzeichnet, dass** die Soll-Drehzahl $N_{soll}$ aus einer Drehzahl/Last-Drehmoment-Kennlinie $N(M_L)$ der Arbeitsmaschine (3) und einer Drehzahl/Antriebs-Drehmoment-Kennlinie $N(M_A)$ des Antriebsmotors (2) berechnet wird.

7. Verfahren nach einem der Ansprüche 2 oder 4 bis 6, **dadurch gekennzeichnet, dass** die Berechnung der Soll-Drehzahl $N_{soll}$ in Abhängigkeit einer Spannung $U_A$, einer Temperatur $T_W$ von Wicklungen (8) und einer Temperatur $T_M$ von Permanentmagneten (6) des Antriebsmotors (2) sowie einer Lufttemperatur $T_L$ erfolgt.

8. Verfahren nach einem der Ansprüche 5 bis 7, **dadurch gekennzeichnet, dass** die Kennlinien zumindest teilweise als Polynome dargestellt sind.

9. Verfahren nach einem der vorangegangenen Ansprüche, **dadurch gekennzeichnet, dass** der elektrische Antriebsmotor (2) ein Gleichstromnebenschluss-Motor ist.

10. Verfahren nach einem der vorangegangenen Ansprüche, **dadurch gekennzeichnet, dass** die Arbeitsmaschine (3) ein Lüfterrad ist.

**Claims**

1. Method for determining the loading of an electric drive motor (2) which is coupled to a working machine (3) for drive purposes, comprising the steps of:

   a. calculating a characterizing variable of a setpoint operating point $A_{soll}$ of the electric drive motor (2), with the setpoint operating point $A_{soll}$ having an associated setpoint load torque $M_{Lsoll}$ and the characterizing variable being calculated from the equality of the setpoint load torque $M_{Lsoll}$ and a drive torque $M_A$ on the basis of torque-dependent characteristic curves of the drive motor (2) and the working machine (3),
   b. calculating a characterizing variable of an actual operating point $A_{ist}$ of the electric drive motor (2), this actual operating point having an associated actual load torque $M_{List}$, from an induced back e.m.f. voltage which is measured in the currentless state of the motor,
   c. comparing the characterizing variable of the actual operating point $A_{ist}$ with the characterizing variable of the setpoint operating point $A_{soll}$, and
   d. evaluating a deviation in the characterizing variable of the actual operating point $A_{ist}$ from the characterizing variable of the setpoint operating point $A_{soll}$ for detecting an overloading of the electric drive motor (2).

2. Method according to Claim 1, **characterized in that** the setpoint operating point $A_{soll}$ is **characterized by** a calculated setpoint rotation speed $N_{soll}$ of the drive motor (2), and the actual operating point $A_{ist}$ is **characterized by** a calculated actual rotation speed $N_{ist}$ of the drive motor (2).

3. Method according to Claim 1, **characterized in that** the setpoint operating point $A_{soll}$ is **characterized by** a calculated setpoint current $I_{soll}$ of the drive motor (2), and the actual operating point $A_{ist}$ is **characterized by** a calculated actual current $I_{ist}$ of the drive motor (2).

4. Method according to Claim 3, **characterized in that** the setpoint current $I_{soll}$ is calculated as a function of a calculated setpoint rotation speed $N_{soll}$ of the drive motor (2) and the actual current $I_{ist}$ is calculated as a function of a calculated actual rotation speed $N_{ist}$ of the drive motor (2).

5. Method according to Claim 4, **characterized in that** the setpoint current $I_{soll}$ and the actual current $I_{ist}$ are calculated

from a current/drive torque characteristic curve I(M$_A$) of the drive motor (2).

6. Method according to one of Claims 2, 4 or 5, **characterized in that** the setpoint rotation speed N$_{soll}$ is calculated from a rotation speed/load torque characteristic curve N(M$_L$) of the working machine (3) and a rotation speed/drive torque characteristic curve N(M$_A$) of the drive motor (2).

7. Method according to one of Claims 2 or 4 to 6, **characterized in that** the setpoint rotation speed N$_{soll}$ is calculated as a function of a voltage U$_A$, a temperature T$_W$ of windings (8) and a temperature T$_M$ of permanent magnets (6) of the drive motor (2) and also an air temperature T$_L$.

8. Method according to one of Claims 5 to 7, **characterized in that** the characteristic curves are represented at least partially by polynomials.

9. Method according to one of the preceding claims, **characterized in that** the electric drive motor (2) is a DC shunt-wound motor.

10. Method according to one of the preceding claims, **characterized in that** the working machine (3) is a fan impeller.

**Revendications**

1. Procédé destiné à déterminer la charge appliquée à un moteur d'entraînement électrique (2) couplé à une machine de travail (3) afin d'effectuer un entraînement, comprenant les étapes de :

    a. Calcul d'une valeur caractérisante d'un point de travail de consigne A$_{soll}$ du moteur d'entraînement électrique (2), un couple sous charge de consigne M$_{Lsoll}$ étant associé au point de travail de consigne A$_{soll}$ et le calcul de la valeur caractérisante s'effectuant à partir de l'égalité du couple sous charge de consigne M$_{Lsoll}$ et d'un couple d'entraînement M$_A$ à l'aide de lignes caractéristiques dépendant d'un couple de rotation du moteur d'entraînement (2) et de la machine de travail (3),
    b. Calcul d'une valeur caractérisante d'un point de travail réel A$_{ist}$ du moteur d'entraînement électrique (2), qui est associé à un couple sous charge réel M$_{List}$, à partir d'une contre-tension induite mesurée à l'état sans courant du moteur,
    c. Comparaison de la valeur caractérisante du point de travail réel A$_{ist}$ avec la valeur caractérisante du point de travail de consigne A$_{soll}$, et
    d. Evaluation d'un écart de la valeur caractérisante du point de travail réel A$_{ist}$ par rapport à la valeur caractérisante du point de travail de consigne A$_{soll}$ pour identifier une surcharge du moteur d'entraînement électrique (2).

2. Procédé selon la revendication 1, **caractérisé par le fait que** le point de travail de consigne A$_{soll}$ est **caractérisé par** une vitesse de rotation de consigne calculée N$_{soll}$ du moteur d'entraînement (2) et le point de travail réel A$_{ist}$ est **caractérisé par** une vitesse de rotation réelle calculée N$_{ist}$ du moteur d'entraînement (2).

3. Procédé selon la revendication 1, **caractérisé par le fait que** le point de travail de consigne A$_{soll}$ est **caractérisé par** un courant de consigne calculé I$_{soll}$ du moteur d'entraînement (2) et le point de travail réel A$_{ist}$ est **caractérisé par** un courant réel calculé I$_{ist}$ du moteur d'entraînement (2).

4. Procédé selon la revendication 3, **caractérisé par le fait que** le courant de consigne I$_{soll}$ est calculé en fonction d'une vitesse de rotation de consigne calculée N$_{soll}$ du moteur d'entraînement (2) et le courant réel I$_{ist}$ en fonction d'une vitesse de rotation réelle calculée N$_{ist}$ du moteur d'entraînement (2).

5. Procédé selon la revendication 4, **caractérisé par le fait que** le courant de consigne I$_{soll}$ et le courant réel I$_{ist}$ sont calculés à partir d'une ligne caractéristique courant/couple d'entraînement I(M$_A$) du moteur d'entraînement (2).

6. Procédé selon une des revendications 2, 4, ou 5, **caractérisé par le fait que** la vitesse de rotation de consigne N$_{soll}$ est calculée à partir d'une ligne caractéristique vitesse de rotation/couple sous charge N(M$_L$) de la machine de travail (3) et d'une ligne caractéristique vitesse de rotation/couple d'entraînement N(M$_A$) du moteur d'entraînement (2).

7. Procédé selon une des revendications 2 ou 4 à 6, **caractérisé par le fait que** le calcul de la vitesse de rotation de

consigne $N_{soll}$ s'effectue en fonction d'une tension $U_A$, d'une température $T_w$ d'enroulements (8) et d'une température $T_M$ d'aimants permanents (6) du moteur d'entraînement (2) ainsi que d'une température de l'air $T_L$.

8. Procédé selon une des revendications 5 à 7, **caractérisé par le fait que** les lignes caractéristiques sont représentées au moins partiellement sous forme de polynômes.

9. Procédé selon une des revendications précédentes, **caractérisé par le fait que** le moteur d'entraînement électrique (2) est un moteur à dérivation à courant continu.

10. Procédé selon une des revendications précédentes, **caractérisé par le fait que** la machine de travail (3) est une roue de ventilateur.

Fig. 1

Fig. 2

Fig. 3

13

Fig. 4

Fig. 5

**EP 1 817 842 B1**

**IN DER BESCHREIBUNG AUFGEFÜHRTE DOKUMENTE**

**In der Beschreibung aufgeführte Patentdokumente**

- EP 0432747 A
- EP 1039139 A